# EUROPEAN PATENT APPLICATION

(11) **EP 4 745 210 A1**
(43) Date of publication of application: **20.05.2026**
(21) Application number: 25836515.4
(22) Date of filing: 04.03.2025
(51) Int. Cl.: C09J 115/02, B32B 27/00, C09J 7/38, C09J 11/06, C09J 133/04

(54) **FLUORORUBBER TACKINESS AGENT COMPOSITION**

(30) Priority: 12.07.2024 JP 2024112199
(71) Applicant: Unimatec Co., Ltd., Tokyo 105-0012 (JP)
(72) Inventor: HIGASHIRA, Toshihiro, Fujisawa-shi, Kanagawa 251-0042 (JP); NISHIYAMA, Yoshiki, Fujisawa-shi, Kanagawa 251-0042 (JP); MARUYAMA, Kei, Fujisawa-shi, Kanagawa 251-0042 (JP)
(74) Representative: Kraus & Lederer PartGmbB
(86) International application number: PCT/JP2025/007604
(87) International publication number: WO 2026/013981

(57) **Abstract**

A fluororubber pressure sensitive adhesive composition obtained by blending modified fluororubber having an unsaturated bond or an unsaturated bond and a functional group, and having a Mooney viscosity ML₁₊₁₀ (121°C) of 10 to 80 with an acrylic pressure sensitive adhesive containing an acrylic copolymer with a glass transition temperature Tg of 20°C or lower. The acrylic pressure sensitive adhesive is used at a ratio of 10 to 400 parts by weight, based on 100 parts by weight of the modified fluororubber. The fluororubber pressure sensitive adhesive composition exhibit excellent adhesion and stickiness without impairing the heat resistance, chemical resistance, weather resistance, flame retardancy, and other properties inherent in fluororubber.

## Description

### TECHNICAL FIELD

The present invention relates to a fluororubber pressure sensitive adhesive composition. More particularly, the present invention relates to a fluororubber pressure sensitive adhesive composition that has excellent adhesion and stickiness without impairing the heat resistance, chemical resistance, weather resistance, flame retardancy, and other properties inherent in fluororubber.

Conventionally, commonly used adhesives are vinyl acetate resin, ethylene-vinyl acetate copolymer resin, vinyl chloride resin, epoxy resin, urethane resin, styrene resin, acrylic resin, polyamide resin, cyanoacrylate, cellulose resin, silane based, silicone based, and other resin based adhesives, or nitrile rubber, styrene-butadiene rubber, chloroprene rubber, and other rubber based adhesives. Heat resistant pressure sensitive adhesives generally include acrylic pressure sensitive adhesives and silicone pressure sensitive adhesives. Acrylic pressure sensitive adhesives have inferior heat resistance to silicone pressure sensitive adhesives, and silicone pressure sensitive adhesives have lower adhesive strength than acrylic pressure sensitive adhesives. Here, pressure sensitive adhesives other than silicone based pressure sensitive adhesives are difficult to use for long term heat resistant applications at 175°C or higher, whereas silicone based pressure sensitive adhesives cannot be used for electronic component applications from the viewpoint of contamination.

Fluororesin and fluororubber with excellent heat resistance are excellent in long term durability at a temperature of 175°C or higher, chemical resistance, weather resistance, wear and abrasion resistance, and other properties; however, due to their poor stickiness and adhesion, they cannot generally be used alone as pressure sensitive adhesives or adhesives. Fluororubber that is not crosslinked has slight tackiness, but has poor adhesion. Such uncrosslinked fluororubber can be dehydrofluorinated with alkali to develop stickiness and achieve adhesion; however, because it is not crosslinked, the strength, liquid resistance such as solvent resistance and chemical resistance, pressure resistance, and adhesive strength under heat are poor, limiting its range of use.

Moreover, general fluororubber can be crosslinked with polyols, polyamines, peroxides, or the like to improve the strength, liquid resistance such as solvent resistance and chemical resistance, pressure resistance, and adhesive strength under heat; however, even though the glass transition temperature Tg is equal to or lower than room temperature, stickiness and adhesion become poor after crosslinking. Thus, crosslinked fluororubber cannot generally be used as a pressure sensitive adhesive.

Furthermore, in polyol crosslinking of fluororubber with bisphenol AF etc. or amine crosslinking of fluororubber with a bifunctional polyamine compound, dehydrofluorination occurs without the presence of divalent metal oxides, such as magnesium oxide, or calcium hydroxide, resulting in the formation of carbon-carbon unsaturated bonds. Therefore, in crosslinking, while divalent metal oxides, such as magnesium oxide, or calcium hydroxide is essential, divalent metal oxides have the problem of absorbing moisture, which causes the curing rate to increase, making long term storage in sheet form difficult. In addition, calcium hydroxide hardens quickly, and when dissolved in an organic solvent, it gels quickly and cannot be used as an adhesive. Furthermore, adding a large amount of inorganic substances, such as calcium hydroxide and magnesium oxide, eliminates stickiness, further reducing stickiness after crosslinking.

Moreover, for peroxide crosslinking of fluororubber, it is necessary to perform crosslinking while blocking oxygen by pressing or the like. Since exposed areas and areas through which oxygen penetrates do not crosslink, there are problems with poor stickiness and liquid resistance in the uncrosslinked areas. Furthermore, in order to perform crosslinking for a short period of time while blocking air (oxygen) for production purposes, it is necessary to perform crosslinking quickly. When a rubber composition is dissolved in an organic solvent to prepare an adhesive, it is difficult to use it due to rapid gelation, and exposure to air during solvent drying deactivates the peroxide compound, preventing sufficient crosslinking.

Although standard fluororubber can be crosslinked with a crosslinking agent using an acid acceptor etc., it cannot be crosslinked with an epoxy resin, which has excellent heat resistance and water resistance and can increase adhesive strength. Even if epoxy resin and polyamine are added to standard fluororubber, although the epoxy resin reacts with the polyamine, the crosslinking density of the fluororubber does not increase, and improvements in adhesion and liquid resistance cannot be achieved.

Patent Document 1 discloses a pressure sensitive adhesive composition comprising a fluorine based oligomer with a weight average molecular weight Mw of 3500 or more, an ionic compound, and an acrylic polymer. Although the inclusion of the acrylic polymer improves adhesion, the fluorine based oligomer has poor compatibility with other polymers, such as acrylic polymers. Therefore, the fluorine based oligomer migrates to the surface after coating or drying, resulting in problems such as reduced surface stickiness and adhesion. The degree to which the fluorine based oligomer migrates to the surface varies depending on the exposure time and environmental temperature, and if the adhesion is not stabilized or it is crosslinked, the stickiness is further reduced.

Patent Document 2 proposes a pressure sensitive adhesive comprising, as a main component, a fluorine copolymer obtained by copolymerizing a (meth)acrylic acid perfluoroalkyl ester monomer, a (meth)acrylic acid alkyl ester monomer, a hydroxyl group-containing acrylic monomer, and a carboxyl group-containing acrylic monomer. However, the stickiness cannot be said to be high, the adhesive strength is low, and deterioration occurs after exposure to a high temperature for a long period of time, resulting in a decrease in adhesion.

### PRIOR ART DOCUMENTS

### PATENT DOCUMENTS

Patent Document 1 : JP-B-7177581
Patent Document 2 : JP-A-2004-292529
Patent Document 3 : JP-A-2009-108287
Patent Document 4 : JP-A-2014-105268
Patent Document 5 : JP-B-3327447
Patent Document 6 : JP-B-3975249
Patent Document 7 : JP-A-2002-030263
Patent Document 8 : JP-A-59-059764
Patent Document 9 : JP-A-2-245046

### OUTLINE OF THE INVENTION

### PROBLEM TO BE SOLVED BY THE INVENTION

An object of the present invention is to provide a fluororubber pressure sensitive adhesive composition that has excellent adhesion and stickiness without impairing the heat resistance, chemical resistance, weather resistance, flame retardancy, and other properties inherent in fluororubber.

### MEANS FOR SOLVING THE PROBLEM

Such an object of the present invention can be achieved by a fluororubber pressure sensitive adhesive composition obtained by blending modified fluororubber having an unsaturated bond or an unsaturated bond and a functional group, such as a carboxyl group, and having a Mooney viscosity ML₁₊₁₀ (121°C) of 10 to 80 with an acrylic pressure sensitive adhesive containing an acrylic copolymer with a glass transition temperature Tg of 20°C or lower.

### EFFECT OF THE INVENTION

In the fluororubber pressure sensitive adhesive composition according to the present invention, modified fluororubber having an unsaturated bond (and a functional group, such as a carboxyl group) is blended with an acrylic pressure sensitive adhesive, resulting in excellent effects in that it can exhibit tackiness which, in a case of fluororubber used alone, is inferior to that of commercially available acrylic or silicone pressure sensitive adhesives, without impairing the excellent adhesion after long term heating (heat resistance), chemical resistance, weather resistance, flame retardancy, and other properties of the modified fluororubber. This is because the fluororubber compound is not copolymerized with an acrylic compound, the level of stickiness can be adjusted by adding an acrylic pressure sensitive adhesive, and fluororubber is compatible with the acrylic pressure sensitive adhesive, resulting in a pressure sensitive adhesive with superior heat resistance and adhesion compared to the acrylic pressure sensitive adhesive alone.

In general, when fluororubber is blended with acrylic rubber or an acrylic pressure sensitive adhesive and dissolved in a solvent, the solution undergoes layer separation; thus, even if the resultant is applied, the coated surface is uneven after drying, resulting in uneven thickness, making it impossible to use it effectively as a pressure sensitive adhesive tape, an adhesive sheet, or the like. However, when fluororubber is alkali modified and blended with an acrylic pressure sensitive adhesive, the layer separation of the solution can be prevented, the coated surface is even, and it can be used effectively as a pressure sensitive adhesive tape or an adhesive sheet.

Thus, the use of modified fluororubber with stickiness and adhesion obtained by decomposing uncrosslinked fluororubber with inorganic or organic alkali, reducing its molecular weight, and imparting functional groups thereto results in excellent effects in that compatibility with acrylic pressure sensitive adhesives is improved, separation is prevented even when mixed, and the coated surface is maintained in good condition.

Such modified fluororubber can be co-crosslinked with an acrylic pressure sensitive adhesive using a crosslinking agent generally used for acrylic pressure sensitive adhesives, without adding a generally used acid acceptor, resulting in higher stickiness and adhesion. Therefore, since inorganic fillers, such as acid acceptors, are not necessarily required, the addition of fillers does not deteriorate stickiness, and the addition of crosslinking agents can improve stickiness. Moreover, if no acid acceptor is added, there is no curing degradation caused by acid acceptors, and the adhesion does not decrease significantly with heating. Furthermore, even when adding other pressure sensitive adhesives, the compatibility is good, layer separation does not occur, and uniformity can be achieved even after coating and drying.

Until now, there have been no pressure sensitive adhesives that have better heat resistance than acrylic pressure sensitive adhesives and higher adhesive strength than silicone pressure sensitive adhesives, that are free of silicone contamination, and that have high heat resistance; however, the fluororubber pressure sensitive adhesive composition according to the present invention can provide a pressure sensitive adhesive that can satisfy these requirements. Specifically, for example, when a steel ball with a diameter of 4.8 mm is placed on a sticky surface formed on a slope at an angle of 30 degrees, the fluororubber pressure sensitive adhesive composition according to the present invention has stickiness that prevents the steel ball from rolling.

Since this fluororubber pressure sensitive adhesive composition has tackiness at room temperature, it can be laminated and bonded to the mating adhesive substrate at room temperature, and its stickiness and adhesion can be further enhanced by oven heating treatment. In addition, due to the modification of fluororubber, the molecular weight is reduced, allowing it to fill in the irregularities of the mating adhesive substrate, such as the irregularities of patterns on electronic boards, without any gaps, resulting in high adhesive strength.

Polyamine or polyol crosslinking of binary fluororubber does not occur without divalent metal oxides such as magnesium oxide, or acid acceptors such as calcium hydroxide and hydrotalcite. However, because these particles are large in size, adhesives containing these particles may have particles larger than the coating thickness. In that case, the stickiness, adhesion and heat resistance are reduced. Further, the particles tend to fall off from the adhesive surface, which can cause contamination, such as the falling off of inorganic filler particles in semiconductor applications. In the fluororubber pressure sensitive adhesive composition of the present invention, by modifying fluororubber and imparting functional groups thereto, the modified fluororubber can be directly subjected to a crosslinking reaction with a crosslinking agent such as epoxy resin without the addition of divalent metal oxides such as magnesium oxide, calcium hydroxide, or hydrotalcite, and there is no contamination by particles from the adhesive surface.

In addition, modified fluororubber is crosslinked with epoxy resin without using bisphenol AF, which is an environmentally harmful substance, and little reactive gas is produced when heated during lamination, preventing foaming of the laminate.

### EMBODIMENTS FOR CARRYING OUT THE INVENTION

As the fluororubber, a highly fluorinated elastic copolymer is used. Usable examples thereof include two or more elastic copolymers, such as vinylidene fluoride, hexafluoropropylene, pentafluoropropylene, trifluoroethylene, trifluorochloroethylene, tetrafluoroethylene, vinyl fluoride, perfluoro(methyl vinyl ether), perfluoro(ethyl vinyl ether) and perfluoro(propyl vinyl ether); preferably a vinylidene fluoride-hexafluoropropylene based copolymer; particularly preferably a vinylidene fluoride-hexafluoropropylene copolymer, a vinylidene fluoride-hexafluoropropylene-tetrafluoroethylene tertiary copolymer, and a vinylidene fluoride-hexafluoropropylene-tetrafluoroethylene-perfluoro(alkyl vinyl ether) quaternary copolymer.

Patent Document 3 proposes a pressure sensitive adhesive composition comprising a non-peroxide crosslinkable fluororubber polymer, a peroxide crosslinkable fluororubber polymer, and peroxide. This pressure sensitive adhesive composition has excellent heat resistance and solvent resistance, but does not have stickiness at room temperature. In addition, the peroxide is inactivated by oxygen in the air, and no sufficient crosslinking reaction occurs. Therefore, this pressure sensitive adhesive composition, in which an acrylic pressure sensitive adhesive is not blended, sticks to surfaces, such as glass; however, for example, when a slope at an angle of 30 degrees is formed, and a steel ball with a diameter of 4.8 mm is placed thereon, the steel ball rolls away.

Fluororubber can be produced as a latex by an aqueous emulsion polymerization method or an aqueous suspension polymerization method. In the aqueous emulsion polymerization method, either water-soluble peroxide alone or a redox system combining water-soluble peroxide and a water-soluble reducing substance can be used as a reaction initiator system. Usable examples of the water-soluble peroxide include ammonium persulfate, potassium persulfate, sodium persulfate, and the like. Further, usable examples of the water-soluble reducing substance include sodium sulfite, sodium hydrogen sulfite, and the like. At this time, as the stabilizer for the aqueous emulsion, a pH adjuster (buffer), such as sodium monohydrogen phosphate, sodium dihydrogen phosphate, potassium monohydrogen phosphate and potassium dihydrogen phosphate, is used.

An emulsifier for use in the emulsion polymerization method includes, generally, a fluorinated carboxylate, preferably the following compound:

CF₃CF₂CF₂O[CF(CF₃)CF₂O]nCF(CF₃)COONH₄

n : 1 or 2
The emulsifier can be used as an aqueous solution containing about 1 to about 30wt.%, preferably about 5 to about 20wt.%, thereof. When the amount of the emulsifier is less than this range, monomers and the resulting copolymers can not be uniformly dispersed in the aqueous medium, whereas too large an amount thereof will make the method economically disadvantageous.

Copolymerization reaction is carried out at a temperature of about 20°to 80°C, preferably about 25°to 60°C. Too high a polymerization temperature will give rise to such problems as occurrence of foaming at the time of molding processing. In addition, polymerization pressure for use herein is generally about 5 MPa or less.

Vinylidene fluoride, tetrafluoroethylene and hexafluoropropylene are subjected to a copolymerization reaction in an aqueous medium in the presence of the emulsifier represented by the above general formula. The copolymerization reaction in an aqueous medium can be carried out by a suspension polymerization method; however, in order to obtain the desired average emulsion particle size, an emulsion polymerization method is preferred. The emulsion polymerization reaction is carried out using, as a catalyst, water-soluble inorganic peroxide, such as ammonium persulfate, or a redox system of water-soluble inorganic peroxide and a reducing agent in the presence of a surfactant as an emulsifier that is generally used at a ratio of about 0.001 to 0.2 wt.% based on the total weight of water charged, generally at a pressure of about 0 to 10 MPa, preferably about 0.5 to 4 MPa, at a temperature of about 0 to 100°C, preferably about 20 to 80°C. In that case, in order to keep the reaction pressure within a specific range, it is preferable to supply a fluorinated olefin mixture to be supplied by divided addition method. Moreover, in order to adjust the pH in the polymerization system, an electrolyte substance with buffer capacity, such as sodium monohydrogen phosphate, sodium dihydrogen phosphate and potassium dihydrogen phosphate, or sodium hydroxide may be added. Further, if necessary, a chain transfer agent, such as ethyl malonate, acetone and isopropanol, is used as appropriate.

The polymerization reaction is generally completed for about 1 to 15 hours, although depending on various polymerization conditions. This does not much differ from when an ammonium perfluorooctanoate emulsifier is used. After the completion of the reaction, a potassium alum aqueous solution, sodium chloride aqueous solution, calcium chloride aqueous solution, or the like is added to the obtained aqueous emulsion to coagulate the resulting polymer, followed by washing with water and drying, thereby obtaining a fluorine-containing copolymer.

Here, as surfactants, fluorine based surfactants are widely used in emulsion polymerization reactions of fluorine-containing monomers. In particular, perfluorooctanoic acid C₇F₁₅COOH or a salt thereof [PFOA] is known as a surfactant having excellent monomer-emulsifying properties and latex stability. However, perfluorinated chemical substances are difficult to degrade in the natural environment. Further, it has recently been revealed that C₈ perfluorinated compounds, typified by PFOA, are extremely remaining in the human body. In addition, due to the high affinity of PFOA to rubbers, after agglutination of rubber latex obtained by emulsion polymerization, a large amount of PFOA adheres to or remains in the resulting fluororubber. There is a strong demand for reducing the amount of adhering or remaining PFOA.

For such requests, as a means for imparting environmental degradability to fluorine-containing emulsifiers, it is possible to provide a hydrogenated portion in the perfluorinated hydrophobic group of the surfactant compound. In the fluororubber latex, perfluoroalkylalkylphosphonate CₙF₂ₙ₊₁CₘH₂ₘP(O)(OM¹)(OM²) is used as an emulsifier, making it possible to combat PFOA without using a fluorine based surfactant.

When perfluoroalkylalkylphosphonate is used, it can be obtained by reacting perfluoroalkylalkylphosphonic acid CₙF₂ₙ₊₁CₘH₂ₘP(O)(OH)₂ (n: an integer of 2 to 6, m: an integer of 1 to 3) with alkali metal hydroxide or aqueous ammonia. The alkali metal hydroxide or ammonia forms mono-salts when used in an amount equimolar to the perfluoroalkylphosphonic acid, and forms di-salts when used in an amount of two times the mole of the perfluoroalkylphosphonic acid. Generally, the alkali metal hydroxide or ammonia is used in an amount not less than the theoretically required number of moles. When the alkali metal hydroxide or ammonia is used in an amount equimolar or more and less than two times the mole of the polyfluoroalkylphosphonic acid, a mixture of mono-salts and di-salts is formed.

These perfluoroalkylalkylphosphonates have linear fluoroalkyl groups, and thus have better water solubility than fluoropolyether type emulsifier compounds that have equivalent emulsifying capacity. On the other hand, since their adhesion to the resulting fluororubber is lower than that of PFOA, it is possible to significantly reduce the amount of emulsifier remaining in fluororubber obtained by coagulating a fluororubber latex obtained by emulsion polymerization using various methods, such as salting out, acid precipitation and mechanical stirring. The emulsion polymerization reaction of fluorine-containing monomers using this emulsifier is carried out in the same manner as when using a PFOA emulsifier.

The emulsion polymerization reaction is carried out using, as a catalyst, water-soluble inorganic peroxide, such as ammonium persulfate, or a redox system of water-soluble inorganic peroxide and a reducing agent. At that time, in order to adjust the pH in the polymerization system, an electrolyte substance with buffer capacity, such as phosphate (Na₂HPO₄, NaH₂PO₄, KH₂PO₄, etc.) or borate (Na₂B₂O₇ etc.), or NaOH may be added. The emulsion polymerization reaction is carried out using an emulsifier at about 0.001 to 10 wt.%, preferably about 0.01 to 5 wt.%, based on water under pressure conditions at about 30 to 120°C for about 1 to 48 hours.

Moreover, for the purpose of further increasing stickiness, modified fluororubber with a weight average molecular weight Mw of 300,000 or less is preferably used. The glass transition temperature Tg is preferably 20°C or lower. When using fluororubber that satisfies these ranges, the modification described below gives it stickiness, allowing it to dissolve in a solvent and be applied.

Patent Document 4 discloses an easy adhesive composition containing a hydroxyl group-containing resin, such as acrylic resin or fluororesin, a wax and a polyisocyanate compound, and Patent Document 5 discloses a vinylidene fluoride based resin adhesive comprising soft fluororesin, acrylic resin, vinylidene fluoride based resin, polyisocyanate, and an organic solvent. Although these compositions adhere during crosslinking reactions, there is no adhesion after crosslinking reactions. For this reason, they can be used as paints or adhesives, but cannot be used as pressure sensitive adhesives.

The molecular weight, molecular weight distribution, and Mooney viscosity of fluororubber can be controlled by adjusting the degree of polymerization, alkali amount, modification temperature, time, and other conditions. The weight average molecular weight Mw is measured by gel permeation chromatography and converted using a calibration curve prepared using standard polystyrene.

Fluororubber is modified by a known modification method and then used as modified fluororubber. The modification of fluororubber is performed by introducing unsaturated bonds through partial dehydrofluorination by base modification, such as alkaline modification using inorganic or organic alkali, preferably organic alkali (Patent Documents 6 and 7). This modification process removes HF from the fluoropolymer main chain to thereby form carbon-carbon unsaturated bonds, and the molecular weight of the fluoropolymer is reduced by chain scission reaction. This allows for decomposition, the reduction of the molecular weight and the addition of functional groups in a short period of time, resulting in modified fluororubber with stickiness and adhesion. In inorganic alkali modification, penetration into rubber is low even at room temperature or when heated; thus, organic alkali that penetrates a fluororubber latex at room temperature is preferably used. The organic alkali allows the fluororubber to be uniformly modified, resulting in modified fluororubber with greater stickiness.

Since the modified fluororubber has unsaturated bonds and functional groups, such as carboxyl groups, at the ends, by adding a crosslinking agent, the crosslinking agent reacts and crosslinks with the substrate to be bonded, improving adhesion, durability, liquid resistance, solvent resistance and adhesive strength under heat, and the resultant can be used as an adhesive that takes advantage of the characteristics of fluororubber.

Moreover, partial dehydrofluorination forms unsaturated bonds in the main chain, and after the chain scission reaction, the oxidation reaction forms functional groups, such as carboxyl groups, at the molecular chain ends, allowing crosslinking with crosslinking agents, such as epoxy resins, diamine compounds and polyamine compounds, without the need for an acid acceptor. The number of functional groups to be modified is not particularly limited.

Regarding the modification temperature, the higher, the more high molecular weight substances are produced, and the lower, the more low molecular weight substances are produced. In the case of modification with inorganic alkali, fluororubber cannot be modified unless it is heated to 40°C or higher. In the case of using organic alkali, molecular weight control becomes difficult at a modification temperature of 40°C or higher; thus, the modification is carried out at about 5 to 35°C. In the case of using organic alkali, when the modification temperature is lower than room temperature, it takes time to stabilize modification, and when the modification temperature is within the range of 20 to 30°C, which is room temperature, stable modification is possible in a short period of time. When the modification time is short, the variation in the modification state is large, and when the modification time is long, the variation is small. The more modifiers there are, the more low molecular weight substances are produced, and the modification temperature and the amount of modifier are adjusted depending on the required molecular weight. The heating and drying temperature after modification washing is about 60 to 150°C, preferably about 80 to 120°C. If the heating and drying temperature is lower than this range, insufficient drying and the residual solvent cause foaming when adhesive sheets are laminated, and residual low molecular weight substances cause poor adhesion. If the temperature is higher than this range, more crosslinking occurs, increasing the molecular weight and reducing stickiness.

The organic alkali used is at least one or more members selected from 1,8-diazabicyclo[5.4.0]undecene-7 (DBU), 1,5-diazabicyclo[4.3.0]nonene-5 (DBN), tetramethylammonium hydroxide, tetramethylammonium hydroxide, tetrabutylphosphonium hydroxide, and the like. Examples of the inorganic alkali include potassium hydroxide, sodium hydroxide, lithium hydroxide, and the like, and these are dissolved in water and then mixed with fluororubber.

The modified fluororubber used is one having a Mooney viscosity ML₁₊₁₀ (121°C) of 10 to 80, preferably 10 to 50, as measured according to JIS K6300-1(2013) corresponding to ISO 289:12005, a weight average molecular weight Mw of 1.0 × 10⁵ to 3.0 × 10⁵, and a number average molecular weight Mn of 0.3 × 10⁵ to 7.0 × 10⁵. If the Mooney viscosity is higher than this range, there is no stickiness, and if the Mooney viscosity is lower than this range, decomposition during modification results in the inclusion of liquid substances, which cause staining to the adherent and impair stickiness. Here, the Mooney viscosity is measured according to JIS K6300-1(2013) corresponding to ISO 289:12005 using a Mooney viscometer SMV-201 (produced by Shimadzu Corporation) at a temperature of 121°C for a preheating time of 1 minute and a rotor rotation time of 10 minutes.

The Mooney viscosity ML₁₊₁₀ (121°C) of the fluororubber used is reduced by 15 to 70, preferably 20 to 70, compared to before modification due to the decomposition of fluororubber by modification. As a result, stickiness appears.

A latex liquid or solution of the modified fluororubber can be salted out or coagulated and then washed with water to easily and inexpensively remove components other than fluororubber, thereby forming a non-staining adhesive that can be used for electronic components, semiconductor parts, and the like. This is because the water is heated and dried to prepolymerize (partially crosslink) the fluororubber, imparting stickiness.

Usable acrylic pressure sensitive adhesives are those that contain acrylic acid monomers and methacrylic acid monomers as well as acrylic acid ester monomers and methacrylic acid ester monomers, both of which have highly crosslinkable functional groups. Usable examples thereof include those obtained by copolymerizing monomers not containing functional groups, such as ethyl acrylate (EA), butyl acrylate (BA), and methyl methacrylate (MMA), with at least one of monomers containing highly crosslinkable functional groups, such as methacrylic acid (MAA) and monobutyl fumarate (MBF).

Specific examples of monomers not containing functional groups include (meth)acrylate having an alkyl group (excluding ethyl methacrylate and methyl methacrylate), which is a component that makes it easier to adjust the Tg of the entire sticky layer to an appropriate range. Examples thereof include ethyl acrylate, methyl acrylate, butyl (meth)acrylate, 2-ethylhexyl (meth)acrylate, propyl (meth)acrylate, pentyl (meth)acrylate, hexyl (meth)acrylate, vinyl acetate, vinyl propionate, styrene, (meth)acrylonitrile, and the like; preferably at least one or more members selected from ethyl acrylate, butyl (meth)acrylate, acrylonitrile, methyl acrylate, 2-ethylhexyl (meth)acrylate, and vinyl acetate. The use of these makes it easier to adjust the peel strength from the adherend and also to adjust the Tg of the entire sticky layer to an appropriate range.

Examples of monomers containing highly crosslinkable functional groups include monomers having a carboxyl group, a hydroxyl group, an amino group, an acetoacetoxyethyl group, an epoxy group, or the like, preferably from the viewpoint of versatility, monomers containing at least one of a carboxyl group and a hydroxyl group, more preferably monomers containing a carboxyl group.

Examples of monomers containing a carboxyl group include unsaturated carboxylic acids, such as (meth)acrylic acid (methacrylic acid and/or acrylic acid), fumaric acid, maleic acid, itaconic acid, crotonic acid, trimellitic acid and pyromellitic acid; unsaturated dicarboxylic acid monoesters, such as monomethyl itaconate, monobutyl itaconate, monobutyl fumarate and 2-acryloyloxyethyl phthalate; unsaturated tricarboxylic acid monoesters, such as 2-(meth)acryloyloxyethyl trimellitic acid and 2-(meth)acryloyloxyethyl pyromellitic acid. Examples thereof include carboxyalkyl (meth)acrylates, such as carboxyethyl (meth)acrylate, carboxypentyl (meth)acrylate, and the like.

These monomers are used in such a manner that a monomer not having a highly crosslinkable functional group is used at a ratio of 30 to 95.5 wt.% and a monomer having a highly crosslinkable functional group is used at a ratio of 0.5 to 70 wt.%. The more amount of low molecular weight monomers, such as ethyl acrylate, the better the compatibility with the modified fluororubber tends to be. The degree of crosslinking can be adjusted by copolymerizing a monomer having a highly crosslinkable functional group. Increasing the degree of crosslinking results in increased adhesive strength and improved liquid resistance, whereas the stickiness decreases; thus, the copolymerization ratio of these is adjusted depending on the application.

The synthesis of an acrylic copolymer is carried out by polymerizing these monomers in the presence of a polymerization initiator. The polymerization method is not particularly limited, and conventionally known methods can be used. Examples thereof include a solution polymerization method, an emulsion polymerization method, a suspension polymerization method, a bulk polymerization method, and the like. Preferred among these is a solution polymerization method because polymerization is easy. When solution polymerization is used as the polymerization method, the reaction solvent used is, for example, ethyl acetate, toluene, methyl ethyl ketone, methyl sulfoxide, ethanol, acetone, diethyl ether, and the like. These reaction solvents may be used singly or in combination of two or more.

The polymerization initiator is not particularly limited, and usable examples thereof include radical polymerization initiators, anionic polymerization initiators, cationic polymerization initiators, and the like. Of these, thermal radical polymerization initiators can be preferably used. Examples of thermal radical polymerization initiators include organic peroxides, azo compounds, and the like. Examples of organic peroxides include 1,1-bis(tert-hexylperoxy)-3,3,5-trimethylcyclohexane, tert-hexyl peroxypivalate, tert-butyl peroxypivalate, 2,5-dimethyl-2,5-bis(2-ethylhexanoylperoxy)hexane, tert-hexyl peroxy-2-ethylhexanoate, tert-butyl peroxy-2-ethylhexanoate, tert-butyl peroxyisobutyrate, tert-butyl peroxy-3,3,5-trimethylhexanoate, tert-butyl peroxylaurate, and the like. Examples of azo compounds include azobisisobutyronitrile, azobiscyclohexanecarbonitrile, and the like. These polymerization initiators may be used singly or in combination of two or more.

In the obtained acrylic copolymer, an acrylic pressure sensitive adhesive with a Tg of 20°C or lower, preferably 0°C or lower, is used. The use of an acrylic pressure sensitive adhesive with such a Tg improves stickiness at room temperature.

Further, the weight average molecular weight Mw of the acrylic copolymer is preferably about 100,000 to 1,000,000, more preferably about 300,000 to 500,000. The weight average molecular weight Mw can be adjusted by the polymerization conditions, such as the type or amount of polymerization initiator, the polymerization temperature, and the monomer concentration. If the weight average molecular weight Mw is less than this range, the adhesive strength is reduced, and foaming occurs after lamination. If the weight average molecular weight Mw is higher than this range, the compatibility with the modified fluororubber deteriorates, the liquid undergoes layer separation, and the surface stickiness is lost.

The lower the weight average molecular weight Mw of the acrylic copolymer, the higher the stickiness. If the weight average molecular weight exceeds 1,000,000, the stickiness is lost even at a Tg of 20°C or lower. In the case of an acrylic pressure sensitive adhesive rather than acrylic rubber, a commercially available product can also be used as is. Usable examples thereof include Arontack S-1511X, S-3403, and S-3452YKF, produced by Toagosei Co., Ltd.; Cybinol AT-193, AT-D40, AT-D50, AT-D45, AT-191, AT-260NT, ATR-1, ATR-373 and ATR-347, produced by Saiden Chemical Industry Co., Ltd.; CT-5030, produced by DIC; Nissetsu KP-2500, produced by Nippon Carbide Industries Co., Inc.; and the like.

Patent Document 8 proposes a heat sensitive adhesive comprising fluorine-containing thermoplastic rubber containing an acrylic polymer etc.; however, this heat sensitive adhesive is not a pressure sensitive adhesive like one used for commercially available pressure sensitive adhesive tapes, and has almost no stickiness because the acrylic polymer is rubbery. It can be used as a heat sensitive adhesive, but cannot be used as a pressure sensitive adhesive that is to be pressed at room temperature. When a crosslinking agent is added to this adhesive and crosslinked before lamination, the stickiness and adhesion are lost. Therefore, the desired adhesion cannot be achieved unless the adhesive is laminated to the bonding surface before crosslinking. Further, Patent Document 9 discloses a rubber composition obtained by compounding a blend of specific fluororubber and acrylic rubber with an organic peroxide etc. Similar to the invention described in Patent Document 8, molded products obtained from the disclosed rubber composition are rubbery, are not pressure sensitive adhesives like those used for commercially available pressure sensitive adhesive tapes, have almost no tackiness at room temperature, and cannot be used as pressure sensitive adhesives.

In both of these inventions, fluororubber is combined with a rubbery acrylic polymer, failing to achieve the target stickiness of the present invention. Although they stick to surfaces, such as glass, if a rubber surface is formed on a slope at an angle of 30 degrees, and a steel ball with a diameter of 4.8 mm is placed thereon, for example, the steel ball rolls away.

The acrylic pressure sensitive adhesive is blended at a ratio of 10 to 400 parts by weight, preferably 25 to 250 parts by weight, based on 100 parts by weight of the modified fluororubber. If the blending amount is less than this range, the stickiness is reduced, whereas if the blending amount is greater than this range, the heat resistance and solvent resistance deteriorate. The degree of stickiness can be adjusted depending on the amount of acrylic pressure sensitive adhesive. Blending the acrylic pressure sensitive adhesive into the modified fluororubber makes it possible to adjust the desired stickiness and adhesion that cannot be achieved from the modified fluororubber alone.

The common blending method is to dissolve modified fluororubber in a solvent and then blend it with an acrylic pressure sensitive adhesive solution that has been subjected to solution polymerization by stirring. Other usable methods include a method of latex-modifying fluororubber with alkali and then mixing the resultant with an emulsion acrylic pressure sensitive adhesive, and a method of kneading solid modified fluororubber with a solvent-free acrylic pressure sensitive adhesive using a roll or a kneader.

By further adding a crosslinking agent to the fluororubber composition, the crosslinking agent reacts with the terminal functional group of the prepolymerized fluororubber and further reacts and crosslinks with the substrate to be bonded, improving durability, liquid resistance, chemical resistance, and the like.

The crosslinking agent is not particularly limited as long as it is cured by heat treatment. Examples thereof include thermosetting resins, such as epoxy resin, phenol resin, xylene resin, guanamine resin, diallyl phthalate resin, vinyl ester resin, unsaturated polyester resin, furan resin, polyimide resin, polyurethane resin, cyanate resin, maleimide resin, benzocyclobutene resin and butadiene resin; aromatic diamine compounds, aliphatic diamine compounds, and the like. These can be used singly or in combination of two or more. An epoxy resin is preferably used from the viewpoint of reactivity, heat resistance and adhesion to the substrate, and an aromatic diamine compound is preferably used from the viewpoint of pot life. The epoxy resin and aromatic diamine compound can increase adhesion to the substrate, and also allows crosslinking reactions to both the modified fluororubber and the acrylic pressure sensitive adhesive. Thus, in a cured product of the pressure sensitive adhesive composition, they can contribute to improving stickiness to the modified fluororubber and acrylic pressure sensitive adhesive, compatibility in the coating solution, and the solvent resistance, chemical resistance, water resistance and water vapor resistance of the sheet after coating and drying. When using a crosslinking agent, such as an epoxy resin, a crosslinking reaction occurs even in the presence of oxygen and air. Therefore, coating and crosslinking by oven drying can be performed to allow an adhesion reaction to the mating material without performing a crosslinking reaction while blocking air and oxygen by pressing.

Examples of epoxy resins include bisphenol type epoxy resins, such as bisphenol A type epoxy resin, bisphenol F type epoxy resin and bisphenol S type epoxy resin; novolac type epoxy resins, such as phenol novolac type epoxy resin, cresol novolac type epoxy resin and bisphenol A novolac type epoxy resin; alicyclic epoxy resins, aliphatic chain epoxy resins, diglycidyl etherified products of biphenol, diglycidyl etherified products of naphthalenediol, diglycidyl etherified products of phenols, diglycidyl etherified products of alcohols, and alkyl-substituted and hydrogenated products thereof. Preferably, cresol novolac type epoxy resin is used. The epoxy resins can be used singly or in combination of two or more.

Examples of polyamine compound include 4,4'-methylbis (2-ethyl-6-methylaniline), diaminodiphenyl sulfone, diaminodiphenyl methane, m-phenylenediamine, diethylenetriamine, triethylenetetramine, isophoronediamine, and the like. From the viewpoint of the life of the adhesive liquid, the life of the adhesive sheet and heat resistance, aromatic diamine compounds are more preferred than aliphatic diamine compounds.

The crosslinking agent is used at a ratio of 1 to 50 parts by weight, preferably 4 to 20 parts by weight, based on 100 parts by weight of the modified fluororubber. By compounding a thermosetting resin, the stickiness, adhesion to the substrate, solvent resistance, durability, and the like can be increased. If the amount of the crosslinking agent is less than this range, the adhesive strength is low, and the liquid resistance and durability are reduced. If the amount of the crosslinking agent is greater than this range, the compatibility deteriorates, and the stickiness is lost, resulting in hardness.

Usable examples of crosslinking curing catalysts include imidazole compounds, such as 2-methylimidazole, 2-ethyl-4-methylimidazole, 2-undecylimidazole, 2-heptadecylimidazole, 2-phenylimidazole, 1-benzylimidazole, 1-benzy-2-methylimidazole, 2,4-diamino-6-[2-methylimidazoline-(1)]-ethyl, and s-triazine. The curing catalyst is used at a ratio of 0.1 to 5 parts by weight, preferably 0.2 to 2.5 parts by weight, based on 100 parts by weight of the modified fluororubber. If the compounding ratio of the curing catalyst is less than this range, fluororubber is cured slowly and crosslinked less. On the contrary, if the curing catalyst is used at a ratio greater than this range, the increased curing speed of fluororubber may cause a decrease in the stability over time of the pressure sensitive adhesive organic solvent solution, a decrease in adhesion due to a decrease in the storage stability of the coating sheet, and a decrease in stickiness due to the increased crosslink density or residual catalyst. Depending on the type of epoxy resin and curing speed adjustment, a catalyst may not be used in some cases due to heat treatment.

The fluororubber pressure sensitive adhesive composition may be appropriately used in combination with a tackifying resin, a plasticizer, liquid rubber, a liquid resin, a filler, and the like, in order to adjust the stickiness and adhesion within the range that does not impair the object of the present invention. Here, depending on the heating temperature and heating time after lamination to the mating material, the adhesive strength may increase, and the pressure sensitive adhesive may be transferred to the mating material. For this reason, in order to prevent such transfer, the amount of crosslinking agent may be reduced, and a plasticizer, liquid rubber, a liquid resin, etc. may be used in combination as appropriate.

Examples of tackifying resins include rosin ester based tackifying resin, terpene based resin, terpene phenol based resin, coumarone indene based resin, alicyclic saturated hydrocarbon based resin, C₅ based petroleum resin, C₉ based petroleum resin, C₅₋₉ copolymer based petroleum resin, and the like, all of which have a hydroxyl value of less than 40 mgKOH/g.

Examples of plasticizers include phthalate ester based plasticizers, fatty acid dibasic ester based plasticizers, trimellitate ester based plasticizers, epoxy based plasticizers, phosphate ester based plasticizers, ether based plasticizers, polyester based plasticizers, chlorine based plasticizers, and the like.

Examples of liquid rubber include isoprene, 1,4-polybutadiene, NBR, HNBR, and the like, all of which have a viscosity of 10 to 100,000 mPa·s.

Examples of liquid resins include terpene resin, epoxy resin, polyamide resin, acrylic resin, 1,2-polybutadiene, polyether polycarbonate, polyethylene glycol, and the like, all of which have a viscosity of 10 to 100,000 mPa·s.

As the filler, known materials can be used. Examples thereof include metal hydroxides, such as aluminum hydroxide and magnesium hydroxide; metal oxides, such as aluminum oxide, antimony oxide, tin oxide, titanium oxide and manganese oxide; inorganic fillers, such as silica, calcium silicate, aluminum silicate, calcium carbonate, silicon nitride, aluminum nitride, boron nitride, talc, mica and kaolin; reinforcing agents and various organic flame retardants and inorganic flame retardants. When the maximum particle size of the filler is larger than the coating thickness of the pressure sensitive adhesive, unevenness occurs on the coating sheet; thus, the stickiness can be adjusted by the particle size and the filler compounding amount. In order to increase the stickiness, the amount of the filler added is preferably less than 3%, or it is preferable not to add the filler.

As the solvent used in the fluororubber pressure sensitive adhesive composition, any organic solvent that can dissolve fluororubber can be used without any particular limitation. Examples thereof include ketone based solvents, such as methyl ethyl ketone, methyl isobutyl ketone, di-n-propyl ketone, diisobutyl ketone, phorone, isophorone, cyclohexanone and cyclohexanone; aromatic hydrocarbon based solvents, such as toluene and xylene; ester based solvents, such as ethyl acetate and butyl acetate; and alcohol based solvents, such as ethanol, 2-propanol, n-butanol, amyl alcohol and heptanol. These can also be used as a mixture of two or more solvents.

Examples of the substrate to which the fluororubber pressure sensitive adhesive composition is applied include reinforcing films, such as polyimide films, polyether ether ketone films, polyphenylene sulfide films, aramid films, polyethylene naphthalate films, liquid crystal polymer films, polyethylene terephthalate films, polyethylene films, polypropylene films, TPX films and fluorine based resin films; and copper, silver, gold, tin, aluminum, indium, and alloys thereof. After coating on metal, a releasable film, a release film, release paper, or the like, the resultant may be attached to a reinforcing film or metal and transferred thereto.

The resin material that constitutes the substrate film may be compounded with, if necessary, antioxidants, UV absorbers, plasticizers, colorants such as pigments and dyes, and various other additives. For example, well known or commonly used surface treatment, such as corona discharge treatment, plasma treatment, UV irradiation treatment, acid treatment, alkali treatment and primer coating, may be applied. Such surface treatment can be, for example, treatment for enhancing the adhesiveness between the substrate film and the pressure sensitive adhesive layer (anchoring properties of the pressure sensitive adhesive layer). The thickness of the substrate film used is generally about 5 to 200 µm, preferably about 10 to 100 µm. When the thickness of the substrate film is within this range, the workability of lamination to the adherend and the workability of peeling from the adherend are excellent, which is preferable.

As the coating method of the pressure sensitive adhesive, for example, after the solid matter content is adjusted to 10 to 50 wt.%, preferably 15 to 40 wt.%, coating is performed so that the thickness after drying is 5 to 200 µm. Coating methods include roll coating, die coating, and knife coating, as well as screen printing and partial coating using a dispenser or by inkjet. The coating liquid is adjusted to a viscosity suitable for each coating method. For example, the viscosity is preferably 500 to 5,000 mPa·s for roll coating, and the solid matter content is appropriately adjusted depending on the ambient temperature or liquid temperature. For example, an organic solvent solution of the above pressure sensitive adhesive composition is prepared and applied to a resin film layer, such as polyimide, to form a pressure sensitive adhesive layer, which is then dried at about 50 to 200°C for about 1 to 15 minutes, thereby obtaining an adhesive film. When the acrylic pressure sensitive adhesive contains low molecular weight substances, foaming may occur when heating after lamination. Accordingly, in such a case, the drying temperature after coating can be raised to about 200°C.

Lamination can be achieved according to the Testing methods of pressure sensitive adhesive tapes and sheets of JISZ0237 2009 corresponding to ISO 29862:2007, 29863:2007 and 29864:2007, and they can be laminated and bonded together using a roller or a roll laminator, at room temperature or by heating. Moreover, in treatment with heated air (oven crosslinking) using a vacuum press or a heat press at about 150 to 200°C for about 10 seconds to 3 hours, the adhesion can be further improved by further performing post-treatment at about 150 to 200°C for about 1 minute to 15 hours. After lamination, even without a press, heating in an oven or the like at about 80 to 200°C for about 1 minute to 24 hours can also increase the adhesive strength.

### EXAMPLES

The following describes the present invention with reference to Examples.

### Reference Example 1

### [Production of Fluororubber Latex Liquid]

15 Kg of water and 2.5 g of an emulsifier (FS-1110, produced by Neos Co., Ltd.) were charged in a 30 L stainless steel pressure vessel equipped with a stirrer, and the internal space was then sufficiently replaced with nitrogen gas. Thereafter, 1,285 g of vinylidene fluoride [VdF] and 1,831 g of hexafluoropropene [HFP] were introduced, and the temperature inside the reaction vessel was raised to 70°C. The pressure inside the reaction vessel when the temperature reached 70°C was 3.09 MPa.

A VdF/HFP mixed gas at the same weight ratio as when charged was used as the initially charged gas and pressed in until the internal pressure reached 24 kgf/cm² G. Thereafter, 10 g of diethyl malonate was pressed in, and the internal temperature was raised to 80°C. A polymerization initiator aqueous solution prepared by dissolving 5 g of ammonium persulfate in 150 g of water was pressed into the autoclave to initiate the polymerization reaction. At each time when the internal pressure was reduced to 2.842 MPa, the same VdF/HFP mixed gas was pressed in as a divided gas until the internal pressure reached 2.94 MPa. Every time the internal pressure was reduced to 2.842 MPa, the divided gas was pressed in until the internal pressure reached 2.94 MPa. This operation was repeated. 3 hours after the first addition of the mixed gas after the polymerization reaction was initiated, the addition of the VdF/HFP mixed gas of the same composition was terminated. Immediately after that, the unreacted gas in the autoclave was purged to stop the reaction, thereby obtaining an aqueous emulsion (fluororubber latex liquid). The amount of the fluororubber latex liquid was 23 Kg (solid matter content: 32%, solid fluororubber: 7,310 g).

### [Modification of Fluororubber]

While stirring 1 Kg of the fluororubber latex liquid at a liquid temperature of 25°C, 40 g of a 10 wt.% sodium laurate aqueous solution at a liquid temperature of 25°C was added dropwise, and while stirring the latex liquid at 100 rpm, 119.2 g of a DBU aqueous solution containing 19.2 g of DBU at a liquid temperature of 25°C was added, followed by further stirring at room temperature at 100 rpm for 5 hours to modify the fluororubber.

### [Salting Out of Fluororubber]

While stirring 3 Kg of a 20 wt.% NaCl aqueous solution at 400 rpm, the above modified fluororubber latex liquid was added dropwise, followed by stirring for 5 minutes to achieve fine dispersion. Further, 5 L of water was added, followed by stirring for 5 minutes, after which the resultant was allowed to stand for 3 minutes to settle the fluororubber. The upper layer was removed, and the fluororubber modified latex liquid was salted out.

### [Water Washing of Fluororubber]

5 L of water was added, followed by stirring at 400 rpm for 5 minutes, after which the resultant was allowed to stand for 2 minutes, the modified fluororubber was washed with water and then allowed to settle, and the upper layer was removed. After this operation was repeated 5 times, 5 L of water was added, followed by stirring at 400 rpm for 30 minutes, after which the resultant was similarly allowed to stand for 2 minutes, the modified fluororubber was washed with water and allowed to settle, and the upper layer was removed. This operation was repeated 5 times.

### [Drying of Fluororubber]

The resulting washed modified fluororubber was placed on a net at a height of 30 mm or less, and dried in an oven at 80°C for 15 hours. The Mooney viscosity ML₁₊₁₀ (121°C) of the modified fluororubber after drying was 10, and its weight average molecular weight Mw was 200,000.

### Reference Example 2

In Reference Example 1, the modification step of fluororubber was not performed. The Mooney viscosity ML₁₊₁₀ (121°C) of the unmodified fluororubber after drying was 50, and its weight average molecular weight Mw was 500,000.

### Reference Example 3

900 g of methyl isobutyl ketone was added to 100 g of the unmodified fluororubber after drying obtained in Reference Example 2, and 100 g of a 20 wt.% potassium hydroxide solution was injected. After stirring at a liquid temperature of 60°C at 100 rpm for 8 hours, 9 wt.% sulfuric acid was added dropwise to a pH of 3 to modify the fluororubber. The modified fluororubber solution was added dropwise while stirring to ethanol, and washing and drying were then performed in the same manner as in Reference Example 1. The Mooney viscosity ML₁₊₁₀ (121°C) of the fluororubber after drying was 30, and its weight average molecular weight Mw was 300,000.

### Reference Example 4

### [Preparation of Acrylic Pressure Sensitive Adhesive Solution]

In a reaction vessel equipped with a stirring blade, a thermometer, a nitrogen gas inlet tube, and a condenser, 49 parts by weight of ethyl acrylate, 49 parts by weight of butyl acrylate, 1 part by weight of monobutyl fumarate, and 150 parts by weight of ethyl acetate were charged. After replacement with nitrogen gas for 30 minutes while sitting at 150 rpm, 0.2 parts by weight of 2,2'-azobisisobutyronitrile was charged as a polymerization initiator, and the polymerization reaction was carried out for 6 hours while keeping the liquid temperature at around 65°C, thereby preparing an acrylic pressure sensitive adhesive solution with a solid matter content of 40 wt.%. The weight average molecular weight Mw was 220,000, and the Tg was -43°C.

### Reference Example 5

In Reference Example 4, 99 parts by weight of ethyl acrylate amount was used in place of butyl acrylate, and an acrylic pressure sensitive adhesive solution with a solid matter content of 40 wt.% was prepared. The weight average molecular weight Mw was 110,000, and the Tg was -18°C.

### Example 1

| | |
|---|---|
| Modified fluororubber obtained in Reference Example 1 | 100 parts by weight |
| Acrylic pressure sensitive adhesive solution obtained in Reference Example 4 (equivalent to 100 parts by weight in terms of solid matters) | 250 parts by weight |
| o-cresol novolac type epoxy resin (N-695, produced by DIC Corporation) | 8 parts by weight |
| Imidazole curing catalyst (Curezol 2E4MZ, produced by Shikoku Kasei Holdings Corporation) | 0.5 parts by weight |
| Butyl acetate | 684 parts by weight |

Each of the above components was dissolved to obtain a fluororubber composition.

### Example 2

In Example 1, the amount of the acrylic pressure sensitive adhesive solution was changed to 125 parts by weight (equivalent to 50 parts by weight in terms of solid matters), and the amount of butyl acetate was changed to 559 parts by weight, respectively.

### Example 3

In Example 1, the amount of the acrylic pressure sensitive adhesive solution was changed to 1000 parts by weight (equivalent to 400 parts by weight in terms of solid matters), and the amount of butyl acetate was changed to 1430 parts by weight, respectively.

### Example 4

In Example 1, the same amount (100 parts by weight) of the modified fluororubber obtained in Reference Example 3 was used as the fluororubber.

### Example 5

In Example 1, the same amount (250 parts by weight; equivalent to 100 parts by weight in terms of solid matters) of the acrylic pressure sensitive adhesive solution obtained in Reference Example 5 was used as the acrylic pressure sensitive adhesive solution, and the amount of butyl acetate was changed to 684 parts by weight, respectively.

### Example 6

In Example 1, 1.4 parts by weight of 4,4'-methylenebis(2-ethyl-6-methylaniline) (CUREHARD MED-J, produced by KUMIAI CHEMICAL INDUSTRY CO., LTD.) was further used, and the amount of butyl acetate was changed to 690 parts by weight.

### Example 7

In Example 2, o-cresol novolac type epoxy resin and imidazole curing catalyst were not used, and the amount of butyl acetate was changed to 750 parts by weight.

### Example 8

In Example 1, the amount of the acrylic pressure sensitive adhesive solution was changed to 500 parts by weight (equivalent to 200 parts by weight in terms of solid matters), the amount of o-cresol novolac type epoxy resin was changed to 20 parts by weight, and the amount of butyl acetate was changed to 982 parts by weight, respectively.

### Comparative Example 1

In Example 1, a modified fluororubber was not used and the amount of butyl acetate was changed to 552 parts by weight.

### Comparative Example 2

In Example 1, the same amount (250 parts by weight; 100 parts by weight in terms of solid matters) of the unmodified fluororubber obtained in Reference Example 1 was used in place of the modified fluororubber.

| | |
|---|---|
| Comparative Example 3 | |
| Unmodified fluororubber obtained in Reference Example 2 | 100 parts by weight |
| Calcium hydroxide (Caldic #1000, produced by Ohmi Chemical Industry Co., Ltd.) | 3 parts by weight |
| Magnesium oxide (MgO #30, produced by Kyowa Chemical Industry Co., Ltd.) | 6 parts by weight |
| Vulcanizing agent (Curative #30, produced by DuPont) | 6 parts by weight |
| Crosslinking accelerator (BTPPC, produced by HOKKO CHEMICAL INDUSTRY CO., LTD.; | 0.4 part by weight |
| Benzyltriphenylphosphonium Chloride) Butyl acetate | 461 parts by weight |

Each of the above components was dissolved to obtain a fluororubber composition.

### Comparative Example 4

In Example 1, the same amount (100 parts by weight) of the acrylic rubber (PA-522HF, produced by Unimatec Co. Ltd.) was used in place of the acrylic pressure sensitive adhesive solution and the amount of butyl acetate was changed to 834 parts by weight.

### Comparative Example 5

In Example 1, an acrylic pressure sensitive adhesive solution was not used, and the amount of butyl acetate was changed to 434 parts by weight.

The fluororubber composition obtained in each of the above Examples and Comparative Examples was used as a pressure sensitive adhesive to carry out a pressure sensitive adhesive solution solubility test, curability test, solvent resistance test, stickiness evaluation, initial adhesion evaluation, and adhesion test after a heat resistance test. In the solvent resistance test, stickiness evaluation, initial adhesion evaluation, and adhesion test after the heat resistance test, the fluororubber composition was applied to a polyimide film (Kapton EN, produced by Du Pont-Toray Co., Ltd.) with a thickness of 25 µm, and the solvent was dried at 140°C for 5 minutes, after which the coating thickness was adjusted to 50 µm. The pressure sensitive adhesive sheet obtained in this manner was used.

Pressure sensitive adhesive
solution solubility test: After each component of the composition was dissolved, the dissolution state after being left at room temperature for 3 hours was visually observed, and the presence or absence of layer separation was checked.
   When no layer separation was observed, it wasdetermined that there was compatibility, and this case was evaluated as ○, and when layer separation was observed, it was determined that there was no compatibility, and this case was evaluated as ×.
Curability test: The fluororubber composition was applied to a peeling film (Nitoflon No. 900UL, produced by Nitto Denko Corporation), and the solvent was dried at 140°C for 5 minutes, after which the thickness was adjusted to 50 µm. After vacuum drying at room temperature for 1 hour, the peeling film was removed, 5 sheets were stacked to a thickness of 250 µm. The pressure sensitive adhesive sheet obtained in this manner was subjected to a torsional vibration parallel die cure test at 170°C using a Curelastometer (produced by ENEOS Materials Corporation) according to JIS K 6300-2 corresponding to ISO 6502-2:2018, and the change in torque was measured.
   The torque value increases as crosslinking progresses; thus, when an increase in torque value was observed after 100 minutes, it was determined that crosslinking occurred, and this case was evaluated as ○, and when no increase in torque was observed, it was determined that crosslinking did not occur, and this case was evaluated as ×.
Solvent resistance test: The pressure sensitive adhesive sheet was dipped in methyl ethyl ketone at room temperature for 5 minutes, and whether the pressure sensitive adhesive was dissolved in methyl ethyl ketone was visually observed.
   When the pressure sensitive adhesive was not dissolved, it was determined that the fluororubber was crosslinked, and this case was evaluated as ○, and when the pressure sensitive adhesive was dissolved, it was determined that the fluororubber was not crosslinked, and this case was evaluated as ×.
Stickiness evaluation: The evaluation was performed according to JIS Z0237 (inclined ball tack test) corresponding to ASTM D3121.
   The film surface of the pressure sensitive adhesive sheet was bonded together with a slope at an angle of 30 degrees using a double-sided tape, steel balls No. 5 (diameter: 4.8 mm), No. 13 (diameter: 10.3 mm), No. 19 (diameter: 15.1 mm), No. 25 (diameter: 19.8 mm) and No. 32 (diameter: 25.4 mm) were each placed thereon, and whether each steel ball rolled was checked.
   When the steel ball did not roll, it was evaluated as ○ and when the steel ball rolled, it was evaluated as ×.
   The larger the steel ball that did not roll, the higher the stickiness.
Initial adhesion evaluation: The evaluation was performed according to JIS Z0237 corresponding to ISO 29862:2007.
   A polyimide film with a thickness of 25 µm (Kapton EN), a SUS430 plate with a thickness of 0.2 mm, and an aluminum plate with a thickness of 0.2 mm were degreased with methyl ethyl ketone, and a rolled laminate was then bonded thereto at room temperature, after which a 90° peel test (test environment: 23°C±2°C, 50% RH±10% RH, test piece shape: 10 mm in width) was performed to measure the peel strength.
   The higher the peel strength, the higher the adhesion. The peel strength is preferably 0.3 N/mm or more.
Adhesion evaluation after
   heat resistance test: The evaluation was performed according to JIS Z0237 corresponding to ISO 29862:2007.
   A polyimide film with a thickness of 25 µm (Kapton EN) and a rolled laminate were bonded thereto at 100°C, a 90° peel test was performed at 150°C or 200°C after 250 hours, 500 hours, and 1,000 hours to measure the peel strength.
   The higher the peel strength, the higher the heat resistance. The peel strength is preferably 0.3 N/mm or more.

Following Tables 1 to 2 show the results obtained. For each of the Comparative Examples, as the further stickiness evaluation test, the film surface of the pressure sensitive adhesive sheet was bonded together with a slope at an angle of 5 degrees using a double-sided tape, a steel ball No. 5 (diameter: 4.8 mm) was placed thereon, and whether the steel ball rolled was also checked.

**Table 1**

| Test. Evaluation result | | Ex. 1 | Ex. 2 | Ex. 3 | Ex. 4 | Ex. 5 | Ex. 6 | Ex. 7 | Ex. 8 |
|---|---|---|---|---|---|---|---|---|---|
| Pressure sensitive adhesive solution solubility test | | ○ | ○ | ○ | ○ | ○ | ○ | ○ | ○ |
| Curability test | | ○ | ○ | ○ | ○ | ○ | ○ | × | ○ |
| Solvent resistance test | | ○ | ○ | ○ | ○ | ○ | ○ | × | ○ |
| [Stickiness evaluation] | | | | | | | | | |
| Steel ball No. 5 | Angle of 5 | ○ | ○ | ○ | ○ | ○ | ○ | ○ | ○ |
| Steel ball No. 5 | degrees Angle of 30 | ○ | ○ | ○ | ○ | ○ | ○ | ○ | ○ |
| Steel ball No. 13 | degrees Angle of 30 | ○ | × | ○ | ○ | ○ | ○ | × | × |
| Steel ball No. 19 | degrees Angle of 30 | ○ | × | ○ | × | × | × | × | × |
| Steel ball No. 25 | degrees Angle of 30 | × | × | ○ | × | × | × | × | × |
| Steel ball No. 32 | degrees Angle of 30 degrees | × | × | × | × | × | × | × | × |

| [Initial adhesion evaluation] | | | | | | | | | |
|---|---|---|---|---|---|---|---|---|---|
| PI | (N/mm) | 0.55 | 0.38 | 0.84 | 0.31 | 0.46 | 0.31 | 0.30 | 0.35 |
| Al | (N/mm) | 0.37 | 0.30 | 0.72 | 0.32 | 0.42 | 0.33 | 0.29 | 0.37 |
| SUS | (N/mm) | 0.36 | 0.31 | 0.69 | 0.31 | 0.38 | 0.32 | 0.27 | 0.31 |

| [Adhesion evaluation after heat resistance test] | | | | | | | | | |
|---|---|---|---|---|---|---|---|---|---|
| At 150°C for 250 hours | (N/mm) | 0.82 | 0.76 | 0.69 | 0.62 | 0.66 | 0.72 | 0.40 | 1.73 |
| At 150°C for 500 hours | (N/mm) | 1.27 | 0.82 | 0.75 | 0.98 | 1.10 | 1.07 | 0.45 | 1.51 |
| At 150°C for 1000 hours | (N/mm) | 1.20 | 0.89 | 0.96 | 1.04 | 1.15 | 1.10 | 0.48 | 1.35 |
| At 200°C for 250 hours | (N/mm) | 1.41 | 0.80 | 0.62 | 1.51 | 1.21 | 1.24 | 0.48 | 0.96 |
| At 200°C for 500 hours | (N/mm) | 1.29 | 1.13 | 0.55 | 1.39 | 1.10 | 1.35 | 0.50 | 0.78 |
| At 200°C for 1000 (N/mm) hours | 1.00 | 0.74 | 0.45 | 1.20 | 0.90 | 1.23 | 0.55 | 0.54 | |

**Table 2**

| Test. Evaluation result | | Comp. Ex. 1 | Comp. Ex. 2 | Comp. Ex. 3 | Comp. Ex. 4 | Comp. Ex. 5 |
|---|---|---|---|---|---|---|
| Pressure sensitive adhesive solution solubility test | | ○ | × | ○ | × | ○ |
| Curability test | | ○ | × | ○ | ○ | ○ |
| Solvent resistance test [Stickiness evaluation] | | ○ | × | ○ | ○ | ○ |
| Steel ball No. 5 | Angle of 5 degrees | ○ | ○ | × | × | ○ |
| Steel ball No. 5 | Angle of 30 degrees | ○ | × | × | × | × |
| Steel ball No. 13 | Angle of 30 degrees | ○ | × | × | × | × |
| Steel ball No. 19 | Angle of 30 degrees | ○ | × | × | × | × |
| Steel ball No. 25 | Angle of 30 degrees | ○ | × | × | × | × |
| Steel ball No. 32 | Angle of 30 degrees | × | × | × | × | × |

| [Initial adhesion evaluation] | | | | | | |
|---|---|---|---|---|---|---|
| PI | (N/mm) | 0.60 | 0.25 | 0.05 | 0.05 | 0.08 |
| Al | (N/mm) | 0.55 | 0.15 | 0.02 | 0.03 | 0.05 |
| SUS | (N/mm) | 0.53 | 0.12 | 0.03 | 0.02 | 0.04 |

| [Adhesion evaluation after heat resistance test] | | | | | | |
|---|---|---|---|---|---|---|
| At 150°C for 250 hours | (N/mm) | 0.52 | 0.72 | 0.10 | 1.20 | 0.81 |
| At 150°C for 500 hours | (N/mm) | 0.38 | 0.97 | 0.12 | 0.70 | 1.06 |
| At 150°C for 1000 hours | (N/mm) | 0.28 | 1.10 | 0.14 | 1.20 | 1.25 |
| At 200°C for 250 hours | (N/mm) | 0.13 | 1.21 | 0.15 | 1.30 | 1.25 |
| At 200°C for 500 hours | (N/mm) | 0.05 | 1.10 | 0.17 | 0.50 | 1.15 |
| At 200°C for 1000 hours | (N/mm) | 0.02 | 0.95 | 0.19 | 0.20 | 1.05 |

The results of the above Examples and Comparative Examples reveal the following.
(1) In each of the Examples using modified fluororubber, the stickiness, adhesion and heat resistance are high, and the more the acrylic pressure sensitive adhesive there is, the higher the stickiness and adhesion tend to be (Examples 1 to 3).
(2) When using fluororubber modified with organic alkali, higher stickiness and adhesion are obtained compared to when using fluororubber modified with inorganic alkali (Examples 1 and 4).
(3) The lower the glass transition temperature of the acrylic pressure sensitive adhesive is, the higher the stickiness tends to be (Examples 1 and 5).
(4) When a diamine compound is further added, the stickiness decreases slightly, whereas the heat resistance is improved (Examples 1 and 6).
(5) When no crosslinking agent is used or the amount thereof becomes large, the stickiness tends to decrease (Examples 1, 2, 7, and 8).
(6) In the case of an acrylic pressure sensitive adhesive that does not contain fluororubber, stickiness is observed, whereas the adhesive strength after the heat resistance test is low (Comparative Example 1).
(7) When using unmodified fluororubber, the initial adhesive strength and stickiness are low. In addition, the solvent resistance is poor (Comparative Example 2).
(8) When using a component made from a commonly used composition as a fluororubber composition, crosslinking occurs, but the initial adhesive strength is low and the stickiness decreases (Comparative Example 3).
(9) When acrylic rubber is used instead of an acrylic pressure sensitive adhesive, the initial adhesive strength is low and no stickiness is observed (Comparative Example 4).
(10) When no acrylic pressure sensitive adhesive is used, the initial adhesive strength is low and the stickiness is poor (Comparative Example 5).

As shown in the above results, in each of the Comparative Examples, the stickiness is low, the adhesive strength is low during lamination at room temperature, and the heat resistance is poor in some cases. It can be said that they cannot be used as pressure sensitive adhesives that exhibit heat resistance.

### INDUSTRIAL APPLICABILITY

The fluororubber pressure sensitive adhesive composition according to the present invention can be effectively used for tapes, adhesives, electronic components, automotive parts, industrial parts or chemical plants, vibration damping plates, vibration isolation plates, heat insulation materials, solar panels, and the like.

## Claims

1. A fluororubber pressure sensitive adhesive composition obtained by blending modified fluororubber having an unsaturated bond or an unsaturated bond and a functional group, and having a Mooney viscosity ML₁₊₁₀ (121°C) of 10 to 80 with an acrylic pressure sensitive adhesive containing an acrylic copolymer with a glass transition temperature Tg of 20°C or lower.

2. The fluororubber pressure sensitive adhesive composition according to claim 1, wherein the functional group of the modified fluororubber is a carboxyl group.

3. The fluororubber pressure sensitive adhesive composition according to claim 1 or 2, wherein the fluororubber is alkali modified fluororubber whose Mooney viscosity ML₁₊₁₀ (121°C) after alkali modification is 15 to 70 lower than before alkali modification.

4. The fluororubber pressure sensitive adhesive composition according to claim 1, wherein a weight average molecular weight Mw of modified fluororubber is 300,000 or less.

5. The fluororubber pressure sensitive adhesive composition according to claim 1, wherein a weight average molecular weight Mw of the acrylic copolymer is 100,000 to 1,000,000.

6. The fluororubber pressure sensitive adhesive composition according to any one of claims 1 to 5, wherein the acrylic pressure sensitive adhesive is blended at a ratio of 10 to 400 parts by weight based on 100 parts by weight of the modified fluororubber.

7. The fluororubber pressure sensitive adhesive composition according to claim 1, wherein a crosslinking agent is further contained in an amount of 1 to 50 parts by weight based on 100 parts by weight of the modified fluororubber.

8. The fluororubber pressure sensitive adhesive composition according to claim 7, wherein the crosslinking agent is hardening resin and/or aromatic polyamine.

9. The fluororubber pressure sensitive adhesive composition according to claim 7 or 8, wherein imidazole is further used as a crosslinking curing catalyst, and this is contained in an amount of 0.1 to 5 parts by weight based on 100 parts by weight of the modified fluororubber.

10. The fluororubber pressure sensitive adhesive composition according to claim 7, 8, or 9, wherein an acid acceptor is not added.

11. A pressure sensitive adhesive sheet in which the fluororubber composition according to claim 1 is laminated on one or both sides of a substrate.

12. The fluororubber pressure sensitive adhesive composition according to claim 1, which has stickiness that prevent the steel ball from rolling, when a steel ball with a diameter of 4.8 mm is placed on a sticky surface formed on a slope at an angle of 30 degrees.
